# EUROPEAN PATENT APPLICATION

(11) **EP 2 675 221 A2**
(43) Date of publication of application: **18.12.2013**
(21) Application number: 13167438.4
(22) Date of filing: 13.05.2013
(51) Int. Cl.: H04W 52/02

(54) **Method and system for providing wireless base station radio with sleep mode**

(30) Priority: 12.06.2012 US 201213494434
(71) Applicant: Telefonaktiebolaget L M Ericsson (Publ), 164 83 Stockholm (SE)
(72) Inventor: Griffioen, Robert, Ottawa, Ontario K2J 1E7 (CA); Iun, Edwin Vai Hou, Ottawa, Ontario K2T 1J5 (CA)
(74) Representative: HOFFMANN EITLE

(57) **Abstract**

A base station radio having a number of multi-carrier power amplifiers to provide signal diversity at a cell site is disclosed. The base station radio is operable to provide an on-demand sleep mode condition when certain conditions are met. The base station radio has a first multi-carrier power amplifier for providing a main RF beam transmission at one sector of the cell site and a second multi-carrier power amplifier for providing RF beam transmission diversity to the main RF beam transmission. A switch is operable to disable either the first or second multi-carrier power amplifier when a sleep mode condition is required at one or more sectors of the cell site.

## Description

### FIELD OF THE INVENTION

The present application relates generally to radio base stations, more specifically, to radio base stations with signal diversity with sleep mode operation.

### BACKGROUND OF THE INVENTION

A cellular base station typically consists of a radio equipment controller (REC) connected to one or more radio equipment (RE) units.

A battery backup is used to prevent network outage due to power grid failures. Each cell site is provided with battery backup, and switches over automatically to the battery when there is a power outage. This battery backup is limited and might not be adequate in the event of a catastrophic outage.

Reducing the base station radios' power consumption during a catastrophic power outage is meant to assist in extending the life of the battery backup supply and minimize total network outage.

Currently base station radios implement a power reduction mode by reducing the input power equally to all their PAs. This extends base station backup battery life in the event of a network power outage.

Generally these radios operate at the maximum transmit power levels. This is because RF multi carrier power amplifiers (PA) are designed to be most efficient at the maximum output power. When the PA is operated at lower transmitter output to save base station battery power, then the efficiency drops rapidly and the output becomes less linear.

Base station radio's power amplifiers typically use a Doherty design which is roughly 55% - 65% efficient at the amplifier's optimal output. As the PA output is reduced, the overall power savings is much less than expected because of this reduced efficiency.

For these reasons, traditional power reduction implementations have limited capabilities in situations as described above.

### SUMMARY OF THE INVENTION

The present invention is directed to alleviating the problems of the prior art.

The present invention overcomes the problems of the prior art by providing a base station radio having a number of multi-carrier power amplifiers to provide signal diversity at a cell site. The base station radio is operable to provide an on-demand sleep mode condition. The base station radio is comprised of a first multi-carrier power amplifier for providing a main RF beam transmission at one sector of the cell site and a second multi-carrier power amplifier for providing RF beam transmission diversity to the main RF beam transmission. A switch is provided to disable either the first or second multi-carrier power amplifier when a sleep mode condition is required at one or more sectors of the cell site.

In a further embodiment, the present invention provides a method of implementing an on-demand sleep mode condition at a base station radio having a number of multi-carrier power amplifiers to provide signal diversity at a cell site. The method comprises the steps of operating a first multi-carrier amplifier for providing a main RF beam transmission at one sector of the cell sites, operating a second multi-carrier amplifier for providing RF beam transmission diversity to the main RF beam transmission, and activating a switch to disable either the first or second multi-carrier power amplifier when a sleep mode condition is required at one or more sectors of the cell site.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

Fig. 1 is a block diagram illustrating of a typical radio base station providing signal diversity;
Fig. 2 is a block diagram illustrating the basic cell site configuration for a base station such as shown in Fig. 1;
Fig. 3 is a diagram illustrating the effects of reducing input power of Power Amplifiers to cell site signal coverage;
Fig. 4 is a block diagram of a radio base station according to the present invention; and
Fig. 5 & 6 illustrates the signal coverage at a cell site when the power amplifier of a diverse branch is turned off.

### DETAILED DESCRIPTION OF THE EMBODIMENTS

In order to lighten the following description, the following acronyms will be used:
- ADC: Analog-to-digital Converter
- CPRI: Common Public Radio Interface
- DAC: Digital-to-analog Converter
- LNA: Low Noise Amplifier
- PA: Power Amplifier
- REC: Radio Equipment Control
- RE: Radio Equipment
- RX: Receive
- TX: Transmit

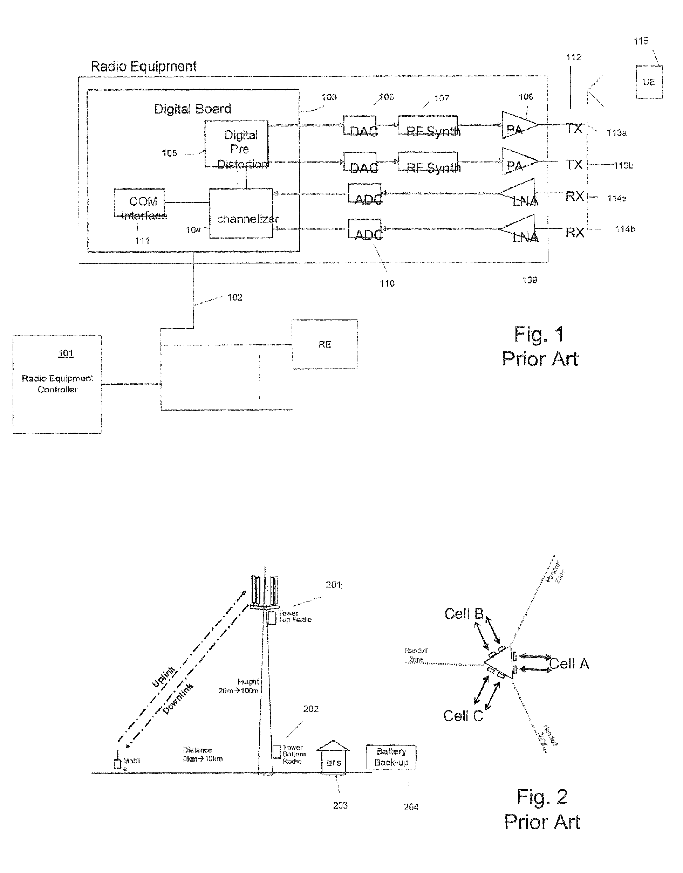

With reference to Fig. 1, we have shown a block diagram illustrating a typical wireless base station radio offering signal diversity.

Cellular network base station radios are designed to be either cabinet mounted (RE) with the Radio Equipment 100 Controller (REC) 101 or at a remote site (RRE). The REC 101 includes a modem block (not shown) which modulates and demodulates the wireless network data into a form termed baseband data. A CPRI link 102 between the REC 101 and the RE 100 carries this baseband data in the CPRI's User Plane. Information at this baseband data layer is encapsulated inside antenna carrier (AxC) blocks inside the CPRI frame.

The radio has a digital board 103 which on the transmit path has a channelizer 104 to multiplex the downlink AxCs onto the assigned carriers. This digital signal is then pre-distorted 105 to compensate for the RF power amplifier's nonlinearity. The digital signal is converted to analog (DAC)106 before RF synthesizing 107 and amplifying it 108. The multi carrier power amplifier (PA)106 typically accounts for 50-75% of the radio's power consumption.

On the receive path the low noise amplifiers (LNA) 109 boosts the received signal before converting it to a digital signal (ADC) 110. The radio board's channelizer 104 then demultiplexes the received signals into the AxCs sent back to the REC 101 on the uplink via the COM interface 111.

The RE 102 amplifies the baseband signal from the REC 101 and transmits it over the antenna system 112. When the radio supports transmit diversity, the same modulated carrier is transmitted over two or more separate antenna systems 113a and 113b and whereas with received diversity, the radios receive over two or more separate antenna systems 114a and 114b. Multiple antennas provide a more robust link to the mobiles. When one path is experiencing a deep fade the other path could be operating at normal signal strength. These antennas usually have the same characteristics and are physically separated from one another by a planned distance as a function of carrier wavelength.

The Power Amplifier unit makes the final amplification of the down link analog signal from the radio's digital section. To optimize on power efficiency and bandwidth an asymmetric Doherty design is typically used in the base station radio using Multi-Carrier Power Amplifiers.

The asymmetric Doherty PA design improves the power efficiency over a conventional Class AB amplifier. Both the main and peak RF signals are amplified in three cascaded amplifier stages. The two paths are not identical in the power amplifier; the final stage in the peak path consists of a parallel stage, while the final stage in the main path has one single transistor. The two paths are combined after the final stage. A directional coupler detects the amplified signal which is passed to the Transmitter Observer Receiver (TOR). A single circulator module at the output will protect the PA from excessive reflected power. What should be noted is that PA efficiency drops off rapidly as the output power is reduced below the optimal operating point when an asymmetrical Doherty amplifier is used.

As indicated above, the base station radio has multiple transmit 113a, 113b and receive antennas 114a, 114b, which provides diversity in both directions. In Fig. 1, the radio (RE)102 is connected to dual antennas transmitting to multiple mobiles or User Equipment (UEs) 115.

Typically base station radios are deployed with high gain antennas with advanced directivity to cover a sector. These antennas are either mounted at the top of the tower 201 or bottom mounted 202, as shown in Fig. 2. For emergency back-up power, the BTS 203 is provided with a battery back-up source 204.

Radio waves obey the inverse square law, so as an example when the transmit power density is halved the maximum operating distance to the receivers is reduced by a factor of four assuming other factors such as ambient noise remains constant.

When the PA operates below its optimal power level as discussed above, it operates at reduced efficiency.

Base station radios are designed to receive signals near the thermal noise floor, typically down -120dBm/MHz. The distance of transmission is limited by the radio noise floor:
● Over the air;
● In components inside the radio receiver; and
● In the antenna and feeder cable.

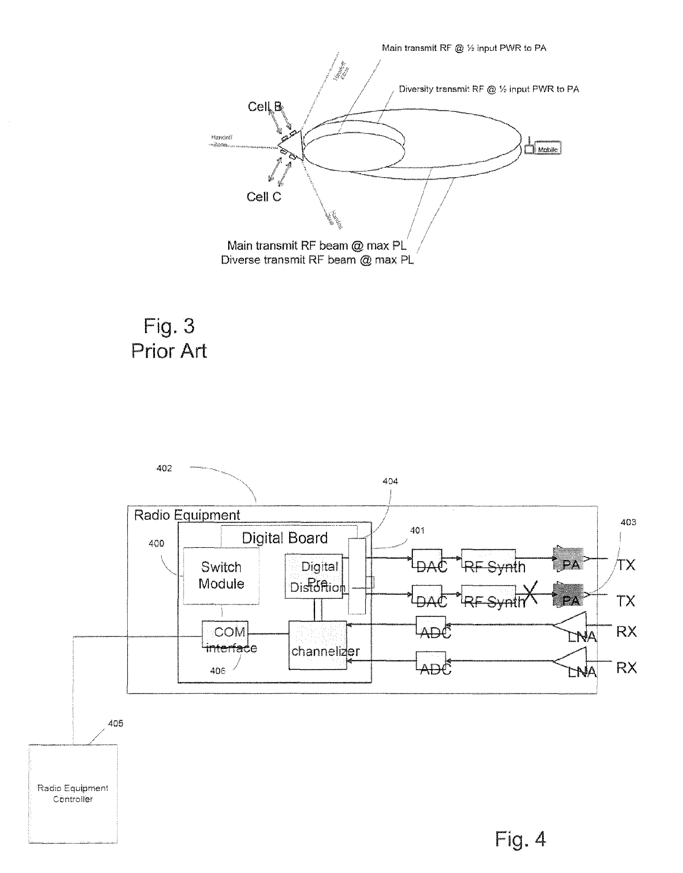

As an example, and with reference to Fig. 3, if the power input to a PA is reduced by 50%, and because of the efficiency drop, the output is reduced a further 15%. The operating range in this scenario is reduced by a factor of 1/(2+.15) ^2=0.216 or a 78% drop in coverage range.

Network service providers can request certain base stations to enter a power reduction mode when certain conditions exist. For example, during an electrical power failure when battery back-up of a cell site is necessary or in order to trigger a cooling period when a radio is starting to overheat, a radio can be placed in a power reduction mode. During a network power outage, the base station switches over automatically to battery backup. In order to save power, a request is sent to the radios (REs and RREs) to enter the power reduction mode. In this mode they are still operational, but at reduced transmit power and power comsumption levels.

As indicated above, although power reduction mode helps reduce power requirements at a base station, the identified inefficiencies can drastically reduce the signal coverage or operating range of a cell site.

The technique proposed in this disclosure implements radio sleep mode by turning off the power amplifier on one or more of the radio's transmitter branches as illustrated in Fig. 4.

A switch module 400 is configured with the digital board 401 of the Radio Equipment 402. The switch module 400 operates to turn off power to a power amplifier 403 via a switch 404. Switch 404 can be implemented in hardware under software control in the switch module 400 and digital board 401. The switch module 400 and switch 404 can be fully integrated with the existing radios as part of a remote service update conducted by the manufacturer or service provider. This way, a command received from the service provider can be delivered to the switch module 400 via the REC 405 and the communication interface 406.

By removing power to a PA 403 of a diverse branch the radio's power consumption is reduced more efficiently then by reducing output power of each PA individually. So instead of reducing the input power equally at each of the PAs, one is removed from service and the other PA continues to operate at the optimal output power. When a branch is set to sleep all the carriers in that branch are released and the PA 403 is turned off.

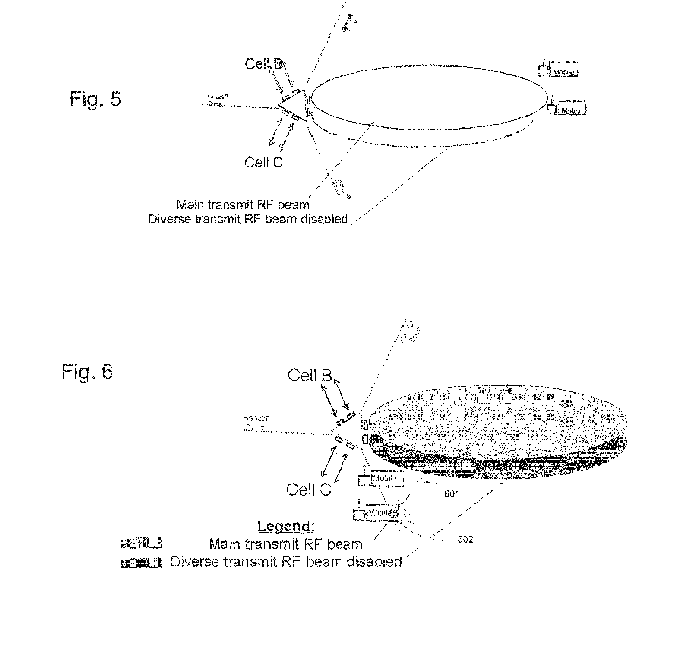

As illustrated in Fig. 5, the radio coverage is reduced when a PA is turned off since the gain from transmitter diversity is reduced. However, this is still more efficient than simply reducing a PA's output power. With this technique the energy saving impact on the wireless network will be more than the current power saving approach which operates the PAs at a lower non-optimal output. The radio implements sleep mode by turning off the RF output of a diverse radio branch. All carriers in this branch are released and the power to the branch's PA is turned off. The main RF branch remains operational at its optimal efficiency. Adjacent transmit patterns have minimal effect on one another. The base station radio optimizes power savings, by turning off the diverse PA but keeping the main PA operating at optimal output. There will be an approximate 3 dB drop in signal strength in the coverage area of the disabled beam.

In another embodiment, a sleep mode condition can be triggered to provide automatic radio interference reduction. This is illustrated in Fig. 6. In Fig. 6, mobiles 601 and 602 are crossing the border between Cell A and Cell C and as a result, are affected by adjacent sector interference. Upon detection of the interference, the switch module at the Radio Equipment can be instructed to disable or turn off a power amplifier operating a branch of one sector.

By turning off the diverse transmitter and in particular, the associated power amplifier, there is an overall 3 dB drop in adjacent sector interference in the region previously covered by the diverse beam, in this case Cell A. To the adjacent cell, that is Cell C, turning off this transmitter can contribute to a Signal to Noise ratio improvement by 3 dB.

In another embodiment, a sleep mode condition can be triggered to provide off-peak hours power savings. During off-peak hours when there are less active mobiles and hence interference, then the base station radios can radiate at lower transmit powers. Turning off the diverse beam is the most efficient power savings approach, as the main PA still operates at the optimal output. As an example, turning off one of the PAs, reduces the power consumption by 33%. That translates to direct saving in Operational Expenditure to the service provider or network operator.

In another embodiment, a sleep mode condition can be triggered to provide high temperature and Power Amplifier failure recovery. In a radio equipment (RE) the PA is known to be one of its major heat generators. With this embodiment, one or more of the radios PA can be turned off completely. When a radio is experiencing high temperature alarm, triggering a sleep mode condition at the affected radio allows a base station to perform self-healing more effectively by turning off the diverse branch completely to allow the radio to cool down. Same mechanism can be use to turn off any malfunctioning PA. This satisfies the self-healing aspect of the Self Organizing Network.

The present invention can be realized in hardware, or a combination of hardware and software. Any kind of computing system, or other apparatus adapted for carrying out the methods described herein, is suited to perform the functions described herein. A typical combination of hardware and software could be a specialized computer system, e.g., a router, having one or more processing elements and a computer program stored on a storage medium that, when loaded and executed, controls the computer system such that it carries out the methods described herein. The present invention can also be embedded in a computer program product, which comprises all the features enabling the implementation of the methods described herein, and which, when loaded in a computing system is able to carry out these methods. Storage medium refers to any volatile or non-volatile storage device.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

Thus, one embodiment is a computer readable medium containing computer readable instruction that, when executed by a processor, cause the processor to perform functions for maintaining clock synchronization between a first and a second radio.

In addition, unless mention was made above to the contrary, it should be noted that all of the accompanying drawings are not to scale. It will be appreciated by persons skilled in the art that the present invention is not limited to what has been particularly shown and described herein above. A variety of modifications and variations are possible in light of the above teachings without departing from the scope and spirit of the invention, which is limited only by the following claims.

## Claims

1. A base station radio having a number of multi-carrier power amplifiers to provide signal diversity at a cell site, said base station radio being operable to provide an on-demand sleep mode condition, comprising:
a) a first multi-carrier power amplifier for providing a main RF beam transmission at one sector of said cell site;
b) a second multi-carrier power amplifier for providing RF beam transmission diversity to said main RF beam transmission; and
c) a switch operable to disable either said first or second multi-carrier power amplifier when a sleep mode condition is required at one or more sectors of said cell site.

2. A base station radio as defined in claim 1, wherein said cell site is provided with a battery back-up to provide power to said base station radio during power failure and wherein said sleep mode condition is triggered upon detection of a power failure such that said switch disables either of said first or second multi-carrier power amplifier for each sector of said cell site in order to reduce power consumption at said cell site during said power failure.

3. A base station radio as defined in claim 1, wherein said sleep mode condition is triggered to provide automatic radio interference reduction such that said switch disables one or more multi-carrier power amplifiers to reduce adjacent sector interference in an affected region of said cell site.

4. A base station radio as defined in claim 1, wherein said sleep mode condition is triggered to provide reduced power consumption during off-peak hours at said cell site by disabling one or more multi-carrier power amplifiers.

5. A base station radio as defined in claim 1, wherein said sleep mode condition is triggered when one or more of said multi-carrier power amplifiers is affected by a high temperature alarm such that the affected power amplifier is turned off to allow the radio to cool down.

6. A base station radio as defined in claim 1, wherein said sleep mode condition is triggered when one or more of said multi-carrier power amplifiers fails.

7. A base station radio as defined in claim 1, wherein said switch is implemented in hardware and an action associated with said sleep mode condition is triggered upon receipt of a software instruction at said radio.

8. A method of implementing an on-demand sleep mode condition at a base station radio having a number of multi-carrier power amplifiers to provide signal diversity at a cell site, comprising the steps of:
a) Operating a first multi-carrier amplifier for providing a main RF beam transmission at one sector of said cell site;
b) Operating a second multi-carrier amplifier for providing RF beam transmission diversity to said main RF beam transmission; and
c) activating a switch to disable either said first or second multi-carrier power amplifier when a sleep mode condition is required at one or more sectors of said cell site.

9. A method as defined in claim 8, wherein said cell site is provided with a battery back-up to provide power to said base station radio during power failure and wherein said sleep mode condition is triggered by a power failure and wherein said switch is activated to disable either of said first or second multi-carrier power amplifier for each sector of said cell site in order to reduce power consumption at said cell site during said power failure.

10. A method as defined in claim 8, wherein said sleep mode condition is triggered to provide automatic radio interference reduction and wherein said switch is activated to disable one or more multi-carrier power amplifiers to reduce adjacent sector interference in an affected region of said cell site.

11. A method as defined in claim 8, wherein said sleep mode condition is triggered to provide reduced power consumption during off-peak hours at said cell site by disabling one or more multi-carrier power amplifiers.

12. A method as defined in claim 8, wherein said sleep mode condition is triggered when one or more of said multi-carrier power amplifiers is affected by a high temperature alarm and wherein said switch is activated to turn off the affected power amplifier to allow the radio to cool down.

13. A method as defined in claim 8, wherein said sleep mode condition is triggered when one or more of said multi-carrier power amplifiers fails and wherein said switch is activated to turn off the failed power amplifier.

14. A method as defined in claim 8, wherein the step of activating a switch is implemented in hardware and an action associated with said sleep mode condition is triggered upon receipt of a software instruction at said radio.
